# EUROPÄISCHE PATENTSCHRIFT

(11) **EP 1 308 332 B1**
(45) Veröffentlichungstag und Bekanntmachung des Hinweises auf die Patenterteilung: **20.12.2006**
(21) Anmeldenummer: 02024099.0
(22) Anmeldetag: 29.10.2002
(51) Int. Cl.: B60J 7/057, B60J 7/12

(54) **Einstellvorrichtung für ein Cabriolet-Verdeckgestell**
Adjuster arrangement for cabriolet canopy frame
Dispositif d'adjustment pour support de capote de cabriolet

(30) Priorität: 03.11.2001 DE 20117926 U
(43) Veröffentlichungstag der Anmeldung: 07.05.2003
(73) Patentinhaber: Wilhelm Karmann GmbH, 49084 Osnabrück (DE)
(72) Erfinder: Knobloch, Guntram, 49084 Osnabrück (DE); Sommer, Markus, 26529 Leezdorf (DE)
(74) Vertreter: Ouzman, Beverley Nicola Claire

(56) Entgegenhaltungen:
- EP-A- 0 930 187
- DE-A- 3 914 638
- DE-A- 19 525 292
- DE-C- 4 121 226
- DE-C- 4 128 542

## Beschreibung

Die Erfindung bezieht sich auf eine Einstellvorrichtung für ein schwenkbares erstes Gestellteil eines Cabriolet-Verdeckgestells, das über eine kinematische Anbindung mit einem zweiten benachbarten oder karosseriefesten Gestellteil verbunden ist, mit einem in seiner wirksamen Länge einstellbaren Anschlag, der ein Verschwenken des ersten Gestellteils relativ zu dem zweiten Gestellteil begrenzt, sowie auf ein damit ausgestattetes Verdeckgestell.

Eine gattungsgemäße Einstell- bzw. Justiervorrichtung ist aus der DE 41 28 542 C2 bekannt geworden. Sie besteht im wesentlichen aus einem Stößelelement, das in unterschiedlicher Ausschiebelänge an dem ersten Gestellteil festlegbar ist und über eine Anschlagfläche in Wirkverbindung mit dem zweiten Gestellteil gebracht werden kann. Eine Rückmeldung über Lage, Position oder Stellung des Verdecks erfolgt dabei nicht.

Ferner sind Abfragesysteme bekannt, z.B. Mikroschalter oder zwischen zwei benachbarten Gestellteilen angeordnete Potentiometer, die separat und zusätzlich zu einem bspw. wie vorstehend beschrieben ausgebildeten Anschlag und örtlich entfernt davon positioniert werden. Eine derartige Lösung ist bspw. aus der EP 0 550 952 B1 bekannt.

Ein Nachteil derartiger Einstelleinrichtungen liegt zunächst darin, daß der jeweilige Schaltpunkt des Abfragesystems meist relativ weit vor dem zugeordneten mechanischen Anschlag liegt, damit gewährleistet ist, daß das Abfragesystem für sämtliche Verstellpositionen des Anschlages (in der Regel mittels Anschlagschraube verstellbar) geeignet ist. Daraus ergeben sich große Nachlaufwege in der Schalterapplikation und große Nachdrückzeiten in der Ablaufsteuerung. Ein weiterer Nachteil liegt darin, daß sich die Integration des Abfragesystems in die meist recht komplexe Verdeckkinematik schwierig gestaltet, da das Verdeck in der Regel im Hauptlager (enger Bauraum) schwenkbeweglich angebunden wird.

Die Aufgabe der Erfindung besteht daher darin, eine gattungsgemäße Einstellvorrichtung dahingehend weiterzuentwickeln, daß der Anschlag in verbesserter Weise auf ein geeignetes Abfragesystem (z.B. Schalterapplikation) abgestimmt werden kann, so daß die Nachdrückzeiten bzw. Nachlaufwege eliminiert oder wesentlich reduziert werden.

Diese Aufgabe wird erfindungsgemäß durch Anspruch 1 und 19 gelöst. Vorteilhafte Weiterbildungen der Erfindung sind in den Unteransprüchen aufgezeigt.

Die Erfindung wird nachfolgend anhand eines Ausführungsbeispiels erläutert, wobei auf eine Zeichnung Bezug genommen ist, in der:
Fig. 1 eine schematische, halbseitige Darstellung eines Verdeckgestells zeigt, bei dem die erfindungsgemäße Einstellvorrichtung zum Einsatz kommt;
Fig. 2 eine schematische, ausschnittsweise Längsschnittansicht einer erfindungsgemäßen Einstellvorrichtung zeigt;
Fig. 3 eine Draufsicht auf eine erfindungsgemäße Einstellvorrichtung im Anlenkbereich zweier benachbarter Gestellteile eines Verdecks, im unbetätigten Zustand zeigt; und
Fig. 4 die Einstellvorrichtung nach Fig. 3 im betätigten Zustand zeigt.

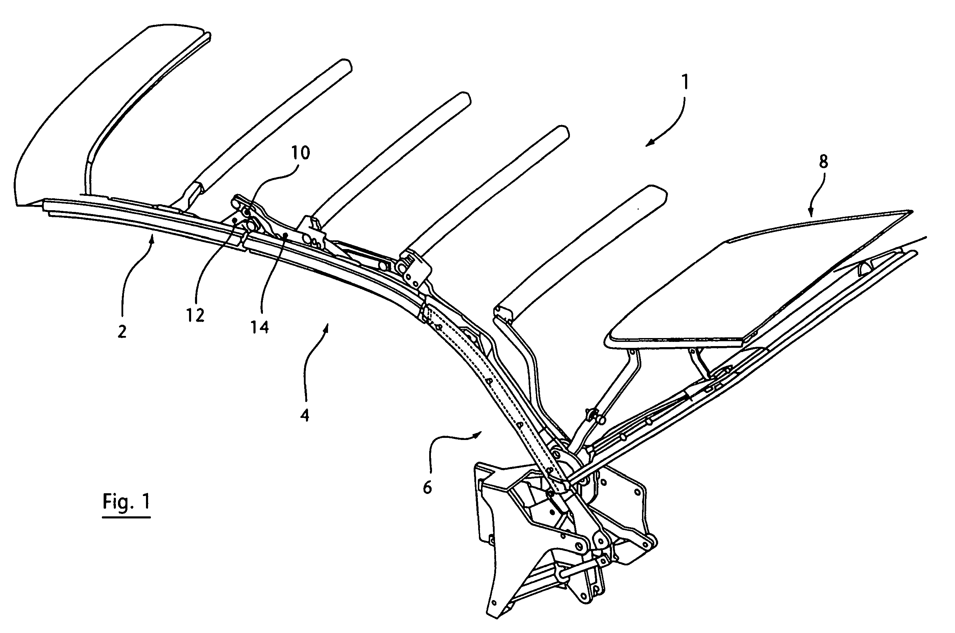

Fig. 1 zeigt in einer halbseitigen Darstellung ein im ganzen mit 1 bezeichnetes Faltverdeck bzw. dessen Verdeckgestell in einer Bewegungsphase kurz nach Beginn des Öffnungsvorgangs bzw. kurz vor Beendigung des Schließvorgangs, wobei das Verdeckgestell im wesentlichen drei zueinander bewegliche bzw. faltbare Dachteile aufweist, nämlich ein vorderes Dachteil 2, ein mittleres Dachteil 4 und ein hinteres Dachteil 6, und wobei zusätzlich noch ein Heckscheibenelement 8 dargestellt ist. Im geschlossenen Zustand wird das Faltverdeck in einem nicht dargestellten Verdeckkasten abgelegt, der mit einem ebenfalls nicht dargestellten Verdeckkastendeckel verschlossen bzw. abgedeckt ist.

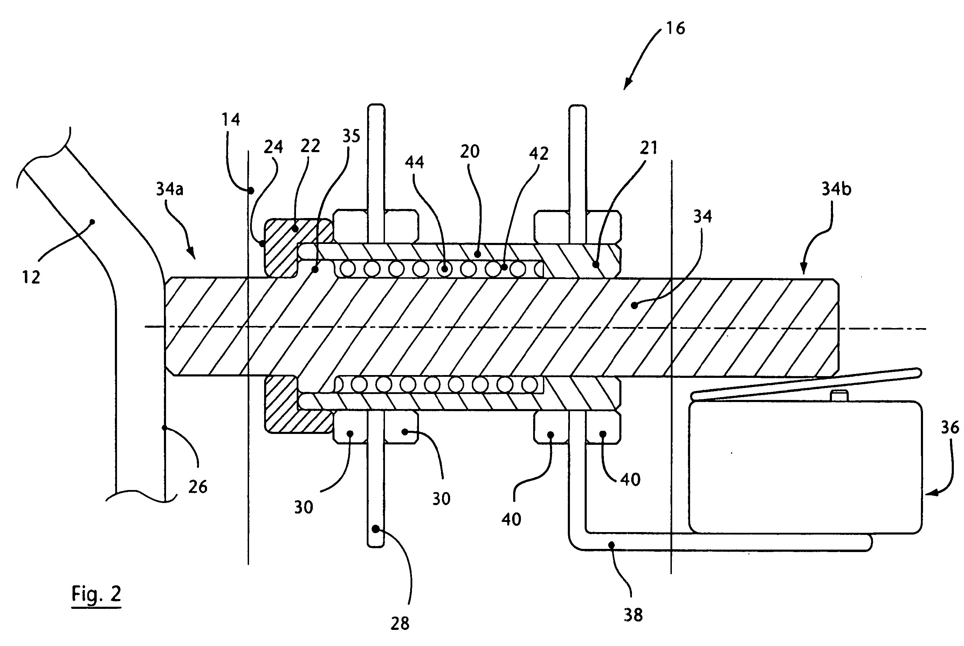

Zum Zwecke der Erläuterung der Erfindung seien nachfolgend beispielhaft die Dachteile 2 und 4 betrachtet, die an einem Schwenkpunkt (Schwenkachse) 10 schwenkbar miteinander verbundene erste 12 und zweite Gestellteile 14 aufweisen, die eine Faltbewegung der Dachteile 2 und 4 relativ zueinander ermöglichen. Im Bereich der gelenkigen Verbindung zwischen den Gestellteilen 12 und 14 ist eine in Fig. 1 nicht näher dargestellte erfindungsgemäße Einstellvorrichtung angebracht, deren Aufbau und Funktionsweise aus Fig. 2 bis 4 hervorgehen. Bei der Schwenkverbindung 10 könnte es sich alternativ auch um eine andersartige kinematische Anbindung handeln, z.B. mit überlagerter Translationsbewegung eines Gestellteils relativ zu einem anderen.

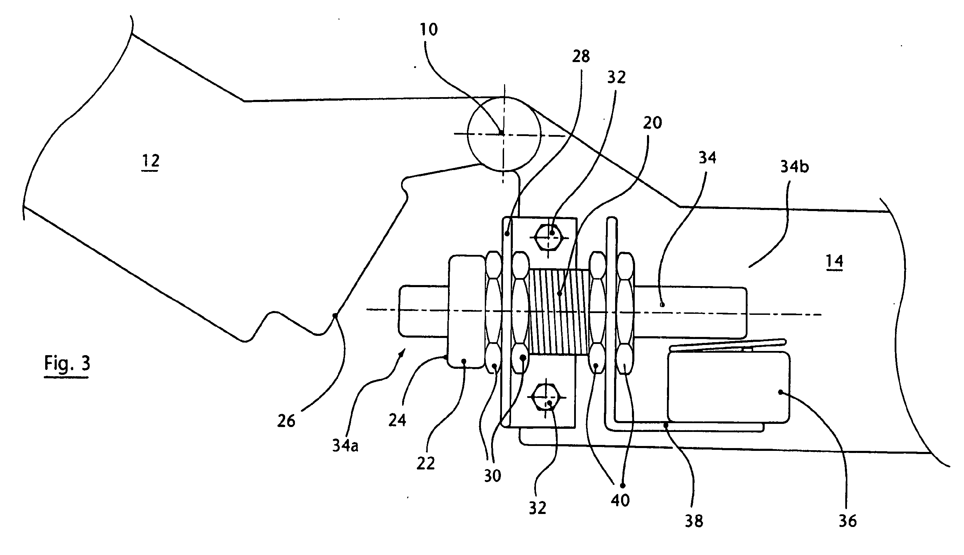

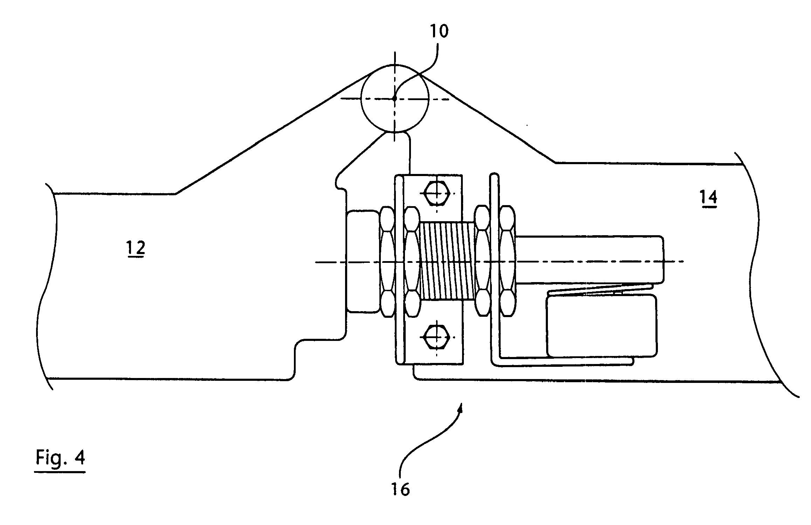

Während Fig. 2 eine Schnittansicht durch die Einstellvorrichtung zur Erläuterung der Einzelkomponenten zeigt, sind in Fig. 3 und 4 zwei Bewegungszustände bzw. Relativstellungen der beiden Gestellteile 12 und 14 gemäß Fig. 1 dargestellt, denen die im ganzen mit 16 bezeichnete Einstelleinrichtung zugeordnet ist.

Das in Fig. 2 bis 4 dargestellte Ausführungsbeispiel zeigt eine Integration bzw. örtliche Zusammenführung eines Anschlags mit einem zugehörigen Abfragesystem. Der Anschlag ist einerseits durch eine Hülse 20 mit Außengewinde gebildet, auf die ein Anschlagelement 22 mit einer ersten Anschlagfläche 24 aufgeschraubt ist, und andererseits durch eine zweite Anschlagfläche 26, die auf dem ersten Gestellteil 12 ausgebildet ist. Die räumliche Fixierung der Hülse 20 auf dem zweiten Gestellteil 14 erfolgt mittels eines Trägerblechs 28 und Kontermuttern 30 auf dem Außengewinde der Hülse 20 derart, daß bei Erreichen einer gewünschten Relativposition zwischen den Gestellteilen 12, 14 im Sinne eines Endanschlags die beiden Anschlagflächen 24, 26 miteinander zusammenwirken (Fig. 4) und ein Verschwenken über den dargestellten Zustand hinaus verhindern.

Das Trägerblech 28 ist mit Schrauben 32 an dem zweiten Gestellteil 14 fixiert und könnte alternativ angeschweißt oder in sonstiger Weise befestigt sein. Auch eine lageeinstellbare Befestigung ist denkbar.

Als Erfassungseinrichtung zum Erfassen einer vorgebaren Relativposition zwischen den beiden Gestellteilen 12, 14 ist zunächst ein Übertragungsglied in Form eines längsbeweglich in der Hülse 20 geführten Stößels 34 vorgesehen, dessen vorderer Endabschnitt 34a im Bereich des Anschlagelements 22 aus der Hülse 20 und über die Anschlagfläche 24 vorsteht.

Die genannte Erfassungseinrichtung weist ferner ein Abfragesystem, im vorliegenden Ausführungsbeispiel in Form eines Mikroschalters 36, auf, wobei dieser durch einen hinteren Endabschnitt 34b des Stößels 34 betätigbar ist. Der Mikroschalter 36 ist ebenfalls auf der Hülse 20 befestigt, und zwar mittels eines Trägerblechs 38, das mit zwei Kontermuttern 40 auf dem Außengewinde der Hülse längseinstellbar fixiert ist.

Der Stößel 34 weist eine Außenschulter 35 (Fig. 2) und die Hülse 20 eine Innenschulter 21 auf, wodurch ein Aufnahmeraum 42 für eine Druckfeder (Schraubenfeder) 44 gebildet ist, die den Stößel in Richtung auf die in Fig. 2 bzw. 3 dargestellte Position vorspannt.

Der Mikroschalter 36 ist vorzugsweise mit einer zweckentsprechenden Versiegelung wetterfest bzw. feuchtigkeitsunempfindlich umhüllt und bspw. mit einer Kunststoffummantelung versehen.

Bei Betätigung des Stößels 34 durch die Anschlagfläche 26 des ersten Gestellteils 12 wird der Stößel solange entgegen der Federkraft in die Hülse hineingeschoben, bis die Anschlagflächen 24, 26 aufeinandertreffen. Durch die Bewegung des Stößels wird an seinem hinteren Endabschnitt 34b der Mikroschalter 36 betätigt (Fig. 4). Die genaue Lage des Schaltpunkts wird durch die Position des Trägerblechs 38 auf der Hülse festgelegt, wobei vorher und in übergeordneter Weise über die Position des Trägerblechs 28 für die Befestigung der Hülse 20 am zweiten Gestellteil 14 (oder an Hauptlager bzw. Karosserie) die Endanschlag-Relativposition der Gestellteile 12, 14 (Fig. 4) eingestellt wird.

Je näher das Trägerblech 38 des Mikroschalters in Richtung des Anschlagelements 22 bzw. des Trägerblechs 28 auf der Hülse 20 montiert wird, desto eher wird der Schaltpunkt erreicht. Der Schaltpunkt kann auf diese Weise auf einen gewünschten Punkt des Ablaufs vor Erreichen der Anschlagposition gelegt werden.

Alternativ zu dem dargestellten Mikroschalter 36 können für das Abfragesystem auch andere Mittel eingesetzt werden, bspw. ein Reedkontakt, Hallsensoren, induktive oder kapazitive Indikatoren oder eine (Gabel-)Lichtschranke. Schließlich sei darauf verwiesen, daß die Verwendung eines beweglichen, mechanischen Übertragungselements wie vorliegend des Stößels 34 nicht zwingend erforderlich ist, nämlich bspw. bei einer Ausführungsform, bei der ein Abfragesystem unmittelbar im Bereich des Anschlags, d.h. im Bereich der Anschlagfläche 24 angeordnet ist. Auch bei einer solchen Ausführungsform ist gewährleistet, daß eine Erfassung der Relativposition unmittelbar benachbart zu dem mechanischen Anschlag erfolgt und durch Lageeinstellung des Abfragesystems der Schaltpunkt einstellbar ist.

## Patentansprüche

1. Einstellvorrichtung für ein schwenkbares erstes Gestellteil (12) eines Cabriolet-Verdeckgestells (1), das über eine kinematische Anbindung mit einem zweiten benachbarten oder karosseriefesten Gestellteil (14) verbunden ist, mit einem in seiner wirksamen Länge einstellbaren Anschlag (24, 26), der ein Verschwenken des ersten Gestellteils (12) relativ zu dem zweiten Gestellteil (14) begrenzt, **dadurch gekennzeichnet, daß** dem Anschlag (24, 26) eine Erfassungseinrichtung (16) zum Erfassen einer vorgebbaren Relativposition zwischen dem ersten (12) und dem zweiten Gestellteil (14) zugeordnet ist.

2. Einstellvorrichtung nach Anspruch 1, **dadurch gekennzeichnet, daß** die Erfassungseinrichtung (16) in oder unmittelbar benachbart zu dem Anschlag (24, 26) angeordnet ist.

3. Einstellvorrichtung nach Anspruch 1 oder 2, **dadurch gekennzeichnet, daß** die Erfassungseinrichtung (16) mechanisch, elektrisch, elektromagnetisch und/oder optisch arbeitet.

4. Einstellvorrichtung nach einem der vorangehenden Ansprüche, **dadurch gekennzeichnet, daß** die Erfassungseinrichtung einen Schalter, eine Lichtschranke oder einen induktiven oder kapazitiven Sensor, insbesondere Hall-Geber, aufweist.

5. Einstellvorrichtung nach einem der vorangehenden Ansprüche, **dadurch gekennzeichnet, daß** die Erfassungseinrichtung (16) ein bewegliches mechanisches Übertragungsglied (34) aufweist.

6. Einstellvorrichtung nach Anspruch 5, **dadurch gekennzeichnet, daß** die Erfassungseinrichtung (16) eine Abfrageeinrichtung (36) aufweist, mit der das Übertragungsglied (34) zusammenwirkt und in der bei Erreichen der vorgegebenen Relativposition ein Schaltvorgang ausgelöst wird.

7. Erfassungsvorrichtung nach Anspruch 5 oder 6, **dadurch gekennzeichnet, daß** das Übertragungsglied als federbelasteter Stößel (34) ausgebildet ist.

8. Einstellvorrichtung nach Anspruch 6 oder 7, **dadurch gekennzeichnet, daß** Anschlag (24), Übertragungsglied (34) und Abfrageeinrichtung (36) eine Baueinheit (16) bilden.

9. Einstellvorrichtung nach einem der vorangehenden Ansprüche, **dadurch gekennzeichnet, daß** der Anschlag eine mit Außengewinde versehene Hülse (20) aufweist.

10. Einstellvorrichtung nach einem der vorangehenden Ansprüche, **dadurch gekennzeichnet, daß** der Anschlag ein separates Anschlagelement (22) aufweist.

11. Einstellvorrichtung nach einem der vorangehenden Ansprüche, **dadurch gekennzeichnet, daß** der Anschlag zur Einstellung seiner wirksamen Länge in veränderbarer Lage fixierbar ist, insbesondere mittels Kontermuttern (28).

12. Einstellvorrichtung nach einem der Ansprüche 5 bis 11, **dadurch gekennzeichnet, daß** das Übertragungsglied (34) konzentrisch innerhalb des Anschlags (24) angeordnet ist.

13. Einstellvorrichtung nach einem der Ansprüche 9 bis 12, **dadurch gekennzeichnet, daß** das Übertragungsglied (34) konzentrisch innerhalb der Hülse (20) angeordnet ist.

14. Einstellvorrichtung nach einem der Ansprüche 6 bis 13, **dadurch gekennzeichnet, daß** die Abfrageeinrichtung ein Schaltelement (36) und ein das Schaltelement (36) aufnehmendes Trägerblech (38) aufweist.

15. Einstellvorrichtung nach Anspruch 14, **dadurch gekennzeichnet, daß** Trägerblech (38) und Schaltelement (36) mit einer feuchtigkeitsdichten Kapselung, insbesondere Kunststoffkapselung, versehen sind.

16. Einstellvorrichtung nach einem der Ansprüche 9 bis 15, **dadurch gekennzeichnet, daß** die Abfrageeinrichtung (36) auf der Hülse (20) lageveränderlich fixierbar ist, insbesondere mittels Kontermuttern (40).

17. Einstellvorrichtung nach einem der Ansprüche 6 bis 16, **dadurch gekennzeichnet, daß** die Abfrageeinrichtung ein Mikroschalter (36) ist.

18. Einstellvorrichtung nach einem der Ansprüche 6 bis 16, **dadurch gekennzeichnet, daß** das Schaltelement ein Reedkontakt, ein Hall-Geber, ein induktiver oder kapazitiver Sensor oder eine (Gabel-)Lichtschranke ist.

19. Verdeckgestell mit mindestens einer Einstellvorrichtung nach einem der vorangehenden Ansprüche.

## Claims

1. An adjusting device for a pivotable first frame part (12) of a cabriolet soft-top frame (1), which is connected to a second frame part (14) which is adjacent or firmly attached to the vehicle body, with a stopper (24, 26) which is adjustable in terms of its effective length and which limits swivelling of the first frame part (12) relative to the second frame part (14), **characterised in that** a detection mechanism (16) for detecting a specifiable relative position between the first (12) and the second frame part (14) is associated with the stopper (24, 26).

2. The adjusting device according to Claim 1, **characterised in that** the detection mechanism (16) is arranged in or directly adjacent to the stopper (24, 26).

3. The adjusting device according to Claim 1 or 2, **characterised in that** the detection mechanism (16) functions mechanically, electrically, electromagnetically and/or optically.

4. The adjusting device according to one of the preceding claims, **characterised in that** the detection mechanism has a switch, a light barrier or an inductive or capacitive sensor, particularly a hall generator.

5. The adjusting device according to one of the preceding claims, **characterised in that** the detection mechanism (16) has a movable mechanical transmission member (34).

6. The adjusting device according to Claim 5, **characterised in that** the detection mechanism (16) has an interrogate mechanism (36) with which the transmission member (34) co-operates and in which a switching process is triggered when the specified relative position is reached.

7. The detection device according to Claim 5 or 6, **characterised in that** the transmission member is formed as a spring-loaded tappet (34).

8. The adjusting device according to Claim 6 or 7, **characterised in that** the stopper (24), the transmission member (34) and the interrogate mechanism (36) form a unit (16).

9. The adjusting device according to one of the preceding claims, **characterised in that** the stopper has a sheath (20) which is provided with a male thread.

10. The adjusting device according to one of the preceding claims, **characterised in that** the stopper has a separate stopper element (22).

11. The adjusting device according to one of the preceding claims, **characterised in that** the stopper is able to be fixed in alterable locations in order to adjust its effective length, particularly by using lock nuts (28).

12. The adjusting device according to one of Claims 5 to 11, **characterised in that** the transmission member (34) is arranged concentrically within the stopper (24).

13. The adjusting device according to one of Claims 9 to 12, **characterised in that** the transmission member (34) is arranged concentrically within the sheath (20).

14. The adjusting device according to one of Claims 6 to 13, **characterised in that** the interrogate mechanism has a switch element (36) and a support plate (38) which receives the switch element (36).

15. The adjusting device according to Claim 14, **characterised in that** the support plate (38) and the switch element (36) are provided with a moisture-proof casing, particularly a plastic casing.

16. The adjusting device according to one of Claims 9 to 15, **characterised in that** the interrogate mechanism (36) is able to be fixed on the sheath (20) in a location-alterable manner, particularly using lock nuts (40).

17. The adjusting device according to one of Claims 6 to 16, **characterised in that** the interrogate mechanism is a microswitch (36).

18. The adjusting device according to one of Claims 6 to 16, **characterised in that** the switch element is a reed contact, a Hall generator, an inductive or capacitive sensor or a (fork) light barrier.

19. A soft-top frame with at least one adjusting device according to one of the preceding claims.

## Revendications

1. Dispositif d'ajustement pour une première partie de support pivotante (12) d'un support de capote de cabriolet (1) qui est connectée par le biais d'une liaison cinématique à une deuxième partie de support (14) adjacente ou fixée à la carrosserie, avec une butée (24, 26) de longueur efficace ajustable, qui limite un pivotement de la première partie de support (12) par rapport à la deuxième partie de support (14), **caractérisé en ce que** l'on associe à la butée (24, 26) un dispositif de détection (16) pour détecter une position relative prédéfinissable entre la première (12) et la deuxième partie de support (14).

2. Dispositif d'ajustement selon la revendication 1, **caractérisé en ce que** le dispositif de détection (16) est disposé dans la butée (24, 26) ou à proximité immédiate de celle-ci.

3. Dispositif d'ajustement selon la revendication 1 ou 2, **caractérisé en ce que** le dispositif de détection (16) fonctionne de manière mécanique, électrique, électromagnétique et/ou optique.

4. Dispositif d'ajustement selon l'une quelconque des revendications précédentes, **caractérisé en ce que** le dispositif de détection présente un commutateur, une barrière lumineuse ou un capteur inductif ou capacitif, notamment un détecteur de Hall.

5. Dispositif d'ajustement selon l'une quelconque des revendications précédentes, **caractérisé en ce que** le dispositif de détection (16) présente un organe de transfert mécanique mobile (34).

6. Dispositif d'ajustement selon la revendication 5, **caractérisé en ce que** le dispositif de détection (16) présente un dispositif d'interrogation (36) avec lequel l'organe de transfert (34) coopère et dans lequel une opération de commutation est déclenchée à l'atteinte de la position relative prédéfinie.

7. Dispositif d'ajustement selon la revendication 5 ou 6, **caractérisé en ce que** l'organe de transfert est réalisé sous la forme d'un poussoir sollicité par ressort (34).

8. Dispositif d'ajustement selon la revendication 6 ou 7, **caractérisé en ce que** la butée (24), l'organe de transfert (34) et le dispositif d'interrogation (36) forment une unité constructive (16).

9. Dispositif d'ajustement selon l'une quelconque des revendications précédentes, **caractérisé en ce que** la butée présente une douille (20) pourvue d'un filetage extérieur.

10. Dispositif d'ajustement selon l'une quelconque des revendications précédentes, **caractérisé en ce que** la butée présente un élément de butée séparé (22).

11. Dispositif d'ajustement selon l'une quelconque des revendications précédentes, **caractérisé en ce que** la butée peut être fixée dans une position variable pour l'ajustement de sa longueur efficace, notamment au moyen de contre-écrous (28).

12. Dispositif d'ajustement selon l'une quelconque des revendications 5 à 11, **caractérisé en ce que** l'organe de transfert (34) est disposé concentriquement à l'intérieur de la butée (24).

13. Dispositif d'ajustement selon l'une quelconque des revendications 9 à 12, **caractérisé en ce que** l'organe de transfert (34) est disposé concentriquement à l'intérieur de la douille (20).

14. Dispositif d'ajustement selon l'une quelconque des revendications 6 à 13, **caractérisé en ce que** le dispositif d'interrogation présente un élément de commutation (36) et une tôle de support (38) recevant l'élément de commutation (36).

15. Dispositif d'ajustement selon la revendication 14, **caractérisé en ce que** la tôle de support (38) et l'élément de commutation (36) sont pourvus d'un encapsulage étanche à l'humidité, notamment un encapsulage en plastique.

16. Dispositif d'ajustement selon l'une quelconque des revendications 9 à 15, **caractérisé en ce que** le dispositif d'interrogation (36) peut être fixé en position variable sur la douille (20), notamment au moyen de contre-écrous (40).

17. Dispositif d'ajustement selon l'une quelconque des revendications 6 à 16, **caractérisé en ce que** le dispositif d'interrogation est un minirupteur (36).

18. Dispositif d'ajustement selon l'une quelconque des revendications 6 à 16, **caractérisé en ce que** l'élément de commutation est un contact à tiges, un détecteur de Hall, un capteur inductif ou capacitif ou une barrière lumineuse (à fourche).

19. Support de capote comprenant au moins un dispositif d'ajustement selon l'une quelconque des revendications précédentes.
